# EUROPÄISCHE PATENTSCHRIFT

(11) **EP 0 907 755 B1**
(45) Veröffentlichungstag und Bekanntmachung des Hinweises auf die Patenterteilung: **01.08.2001**
(21) Anmeldenummer: 97921517.5
(22) Anmeldetag: 15.05.1997
(51) Int. Cl.: C21B 3/08

(54) **VERFAHREN ZUM KONTINUIERLICHEN HERSTELLEN EINER GLASARTIGEN BZW. VERGLASTEN HOCHOFENSCHLACKE**
METHOD OF CONTINUOUSLY PRODUCING VITREOUS BLAST FURNACE SLAG
PROCEDE DE PRODUCTION CONTINUE D'UN LAITIER DE HAUT FOURNEAU VITREUX

(30) Priorität: 15.05.1996 AT 86896
(43) Veröffentlichungstag der Anmeldung: 14.04.1999
(73) Patentinhaber: VOEST-ALPINE INDUSTRIAL SERVICES GmbH, A-4020 Linz (AT)
(72) Erfinder: HULEK, Anton, A-4040 Linz (AT); RITZBERGER, Franz, A-4060 Leonding (AT); WAWRINA, Rainer, A-4060 Leonding (AT)
(74) Vertreter: Haffner, Thomas M., Dr.
(86) Internationale Anmeldenummer: AT9700101
(87) Internationale Veröffentlichungsnummer: WO9743455

(56) Entgegenhaltungen:
- EP-A- 0 205 416
- DE-A- 2 950 974
- PATENT ABSTRACTS OF JAPAN vol. 002, no. 122 (C-024), 13.Oktober 1978 & JP 53 089899 A (KAWASAKI HEAVY IND LTD), 8.August 1978,
- PATENT ABSTRACTS OF JAPAN vol. 004, no. 144 (C-027), 11.Oktober 1980 & JP 55 094405 A (NIPPON KAGAKU GIJUTSU KENKYUSHO:KK), 17.Juli 1980,
- PATENT ABSTRACTS OF JAPAN vol. 008, no. 098 (C-221), 9.Mai 1984 & JP 59 013004 A (NIPPON KOKAN KK), 23.Januar 1984,
- PATENT ABSTRACTS OF JAPAN vol. 016, no. 411 (C-0979), 31.August 1992 & JP 04 139040 A (NISSHIN STEEL CO LTD), 13.Mai 1992,

## Beschreibung

Die Erfindung bezieht sich auf ein Verfahren zum kontinuierlichen Herstellen einer glasartigen bzw. verglasten Hochofenschlacke, bei welchem die Schlacke auf eine Kühlwalze bzw. auf gelenkig miteinander verbundene Kühlplatten aufgebracht wird, welche als endloses Förderband über Umlenkrollen geführt werden und wobei die Kühlung der Schlacke trocken erfolgt, sowie auf eine Einrichtung zur Durchführung des Verfahrens.

Im besonderen zielt die Erfindung hiebei darauf ab, ein rationelles Verfahren bereitzustellen, mit welchem in der Folge eine Trockengranulierung von Hochofenschlacke unter möglichst geringen Betriebskosten und weitestgehender Umweltschonung gelingt.

Übliche Verfahren zur Granulierung von Hochofenschlacke, beispielsweise für die Weiterverarbeitung in der Zementindustrie, sind gegenwärtig als Naßverfahren ausgebildet. Die flüssige Hochofenschlacke wird mit großen Wassermengen zusammengeführt und erstarrt zu einem glasigen Granulat. Der gesamte Wärmeinhalt wird hiebei vernichtet und in der Regel SO₂ und H₂S gebildet, wobei zu allem Überfluß schwefelhältige Abwässer gebildet werden, deren Entsorgung zusätzlichen Aufwand mit sich bringt.

Aus der DE 29 50 974 A ist eine Vorrichtung zur Herstellung einer glasartigen bzw. verglasten Hochofenschlacke bekannt, bei welcher ein endloses Förderband mit an der Außenfläche verlaufenden, sich zum Nutgrund verengenden Kühlnuten vorgesehen ist. Über einen Schlackenschmelzen-Behälter wird in die Kühlnuten Schlackenschmelze eingefüllt, welche nach dem Abkühlen und Erstarren an einer vorbestimmten Stelle mit einem an der Innenfläche des Förderbandes befindlichen Abstreifer aus den Kühlnuten ausgeworfen wird.

Aus der AT B 380 490 ist bereits eine Vorrichtung zur Gewinnung fühlbarer Wärme von schüttfähigem Heißgut zu entnehmen, wobei insbesondere flüssige Hochofenschlacke mit einer derartigen Vorrichtung unter Rückgewinnung der fühlbaren Wärme gekühlt werden kann.

Die bekannte Vorrichtung verfügt über ein über mindestens zwei Umlenkräder geführtes, aus gelenkig verbundenen Platten gebildetes endloses Förderband, auf dessen Obertrum das Heißgut aufgebracht wird, wobei das leere Untertrum durch eine Kühlzone geführt ist. Bei einer derartigen trockenen Kühlung läßt sich üblicherweise eine hohe Kühlgeschwindigkeit, wie sie für eine Verglasung ohne die Gefahr einer nachfolgenden Kristallisation bzw. Rekristallisation erforderlich ist, nicht ohne weiteres verwirklichen. Aus diesem Grund wurden derartige bekannte Einrichtungen zumeist so betrieben, daß in erster Linie eine möglichst vollständige Energierückgewinnung beim Abkühlen erfolgen kann, wobei nachträgliche Kristallisation bzw. Rekristallisation in Kauf genommen wurde.

Die bekannte Einrichtung ist insbesondere auch für Heißgut verwendbar, welches unter Vermeidung von Luftzutritt gekühlt werden muß, wie beispielsweise beim Trockenlöschen von Koks.

Die bekannte Einrichtung verfügt über eine Mehrzahl von Kühlplatten, wobei die Kühlplatten im Obertrum entsprechend erwärmt werden und im Untertrum mit Kühleinrichtungen zusammenwirken, welche beispielsweise von mit Kühlmittel durchflossenen Gegenkühlplatten gebildet sein können. Die Wärmeübertragung erfolgt bei dieser Einrichtung durch Strahlung bzw. durch unmittelbaren Kontakt der Gegenkühlplatten des Förderbandes mit den Kühlplatten für die Abkühlung der Kühlplatten des Förderbandes. Die Kühleinrichtung kann hiebei auch von hintereinander angeordneten hohlen Gegenkühlplatten gebildet sein, wobei die Oberseiten derartiger Gegenkühlplatten als glatte, mit den Kühlplatten des Förderbandes in Kontakt gelangende Gleitflächen ausgebildet sein können.

Die Erfindung zielt im Besonderen darauf ab, ein Verfahren der eingangs genannten Art zu schaffen, bei welchem eine Vorrichtung, wie sie in der AT B 380 490 prinzipiell vorgestellt wurde, mit Erfolg für das rasche Erstarren von Schlacken bei hoher Durchsatzmenge eingesetzt werden kann. Insbesondere soll unmittelbar eine gekühlte verglaste Hochofenschlacke ausgebildet werden, welche sich in der Folge auf trockenem Wege zur weiteren Zerkleinerung bzw. Granulierung eignet und vollständig und ohne Rückstände vom Kühlband mit einfachen Einrichtungen abgeworfen werden kann.

Zur Lösung dieser Aufgabe besteht dieses erfindungsgemäße Verfahren im wesentlichen darin, daß die flüssige Schlacke einem Zwischenspeicher zugeführt wird und aus diesem Zwischenbehälter bei Temperaturen von über 1350°C über eine Verteilerrinne in zueinander parallelen Strängen kontinuierlich auf das Kühlplattenband aufgegeben wird, worauf die gekühlte Schlacke abgeworfen und in einem Brecher trocken zerkleinert bzw. granuliert wird.

Dadurch, daß die flüssige Schlacke einem Zwischenspeicher zugeführt wird und aus diesem Zwischenspeicher bei Temperaturen von über 1350°C über eine Verteilerrinne kontinuierlich auf das Kühlplattenband aufgegeben wird, wird zum einem eine kontinuierliche Betriebsweise ermöglicht und zum anderen werden die geforderten rheologischen Bedingungen gewährleistet, um mit einer Trockenkühlung die erforderlichen Kühlgeschwindigkeiten zur Ausbildung eines glasartigen, oder verglasten Zustandes des Kühlgutes zu erzielen. Das Aufbringen der Schlacke auf die Kühlwalze bzw. das Kühlplattenband in zueinander parallelen Strängen gewährleistet dabei eine gleichmäßige, dünne Schlackenschicht auf der Kühlwalze bzw. dem Kühlplattenband. Die zahlreichen Einzelströme laufen in ein einziges breites dünnes Band zusammen. Auf diese Weise wird sichergestellt, daß überaus dünne Beschichtungen der Kühlwalze bzw. der Kühlplatten über eine große Breite erzielt werden, wodurch die geforderte hohe Abkühlgeschwindigkeit zur Ausbildung des glasartigen Zustandes ohne Gefahr einer Rekristallisation gewährleistet werden kann. Durch Aufgabe der flüssigen Schlacke bei Temperaturen von über 1350°C wird sichergestellt, daß eine gleichmäßige Verteilung ohne Klumpenbildung auf den Kühlplatten erfolgen kann. Dadurch, daß die Durchführung des erfindungsgemäßen Verfahrens auf einer Kühlwalze bzw. auf einem endlosen Förderband aus gelenkig miteinander verbundenen Kühlplatten erfolgt, wird eine einfache Regelung bzw. Steuerung der Materialeigenschaften bzw. des Verglasungszustandes des Kühlgutes geboten.

Die gekühlte verglaste Schlacke kann in der Folge unmittelbar anschließend in einfacher Weise in einem Brecher trocken zerkleinert bzw. granuliert werden, sodaß insgesamt die Möglichkeit geboten wird, Hochofenschlacke bei geringsten Betriebskosten und geringster Umweltbelastung trocken zu granulieren. Da bei der Granulierung der Schlacke kein Wasser verwendet wird, kommt es auch nicht zur Schwefelwasserstoffbildung und auch zu keiner relevanten Schwefeldioxidbildung. Auch die konventionellen Probleme mit der Aufarbeitung des Abwassers entfallen. Die überaus geringe Schichtdicke führt hiebei dazu, daß die Schlacke rasch zumindest oberflächlich erstarrt. Da erstarrte Schlacke eine wesentlich bessere thermische Leitfähigkeit als flüssige Schlacke besitzt, kann bei nur geringer Schichtdichte eine rasche und effiziente Kühlung erzielt und mit kurzbauenden Einrichtungen das Auslangen gefunden werden.

Mit Vorteil wird das erfindungsgemäße Verfahren so durchgeführt, daß die Schichtdicke auf der Kühlwalze bzw. dem Kühlplattenband auf 1 bis 15 mm, vorzugsweise 2 bis 10 mm eingestellt wird, daß die Flüssigschlacke am Kühlplattenband um wenigstens 300°C mit einer Kühlgeschwindigkeit von über 10°C/sec gekühlt wird und daß die gekühlte Schlacke bei Temperaturen von über 600°C abgeworfen wird. Dadurch, daß die Schichtdicke auf den Kühlplatten auf 1 bis 15 mm, vorzugsweise 2 bis 10 mm eingestellt wird, wird es möglich, mit konstruktiv einfachen Mitteln die erforderliche Kühlgeschwindigkeit zu erzielen. Dadurch, daß die Flüssigschlacke am Kühlplattenband nun um wenigstens 300°C mit einer Kühlgeschwindigkeit von über 10°C/sec gekühlt wird, wird zum einen die Verglasung gewährleistet und zum anderen eine Abkühlung auf eine Temperatur vorgenommen, bei welcher die Geschwindigkeit des Kristallwachstumes bereits wesentlich abnimmt, sodaß eine Rekristallisation vermieden wird, wobei dadurch, daß die gekühlte Schlacke bei Temperaturen von über 600°C abgeworfen wird, sichergestellt wird, daß ein zusammenhängendes Schlackenband abgeworfen werden kann und damit eine vollständige und einfache Ablösung des Kühlgutes von den Kühlplatten gelingt. Bei weiterer Abkühlung kann es aufgrund innerer Spannungen zu einer spontanen Desintegration des Kühlgutes kommen, welche durch die Abwurftemperatur, bei Temperaturen von über 600°C vermieden werden kann.

Das erfindungsgemäße Verfahren wird mit Vorteil so durchgeführt, daß die flüssige Schlacke über die Verteilerrinne in zueinander parallele Stränge mit einem Abstand von weniger als 300 mm, vorzugsweise 100 bis 200 mm geteilt auf das Kühlplattenband aufgegeben wird, wodurch eine dünne Schlackenschicht über die gesamte nutzbare Breite ausgebildet wird.

Um sicherzustellen, daß die flüssige Schlacke gleichmäßig auf das Kühlplattenband aufgebracht werden kann, wird mit Vorteil so vorgegangen, daß die Verteilerrinne über wenigstens ein Heizelement insbesondere einem auf die Auslauföffnung gerichteten Brenner nahe der inneren Ablaufkante beheizt und die Schlacke auf Temperaturen über 1350°C insbesondere 1400°C gehalten wird. Auf diese Weise werden lokale Unterkühlungen um Erstarrungsnester vermieden, sodaß eine rasche und homogene Abkühung erfolgen kann.

Durch die erfindungsgemäße Verwendung eine Kühlwalze bzw. von gelenkig miteinander verbundenen Kühlplatten, welche als endloses Förderband über Umlenkrollen geführt werden, ist wie bereits eingangs erwähnt, eine einfache Regelung der Verfahrensweise möglich. Mit Vorteil wird hiebei so vorgegangen, daß der Schlackenabstich aus dem Zwischenspeicher in die Verteilerrinnen über einen regelbaren Verschluß, inbesondere Stopfenablauf in Abhängigkeit von der Schichtdicke der Schlacke auf den Kühlplatten geregelt wird. Die Schichtdicke kann mit üblichen Sensoren abgetastet werden und es kann auf diese Weise eine Grundeinstellung für den sicheren Betrieb der Anlage gewählt werden, welche den jeweiligen Bedürfnissen nachgeführt werden kann. Als Maß für die Schichtdicke lassen sich auch Temperaturmeßwerte oder Temperaturdifferenzmeßwerte heranziehen, da die Abkühlung am Plattenband der Schichtdicke proportional ist. Eine weitere Verbesserung der Regelung und der Ansteuerung der gewünschten Materialeigenschaft, läßt sich dadurch verwirklichen, daß die Fördergeschwindigkeit der Kühlwalze bzw. der Kühlplatten und/ oder der Schlackenabstich aus dem Zwischenspeicher in Abhängigkeit von einem Meßwert für den Verglasungszustand am Abwurfende der Kühlwalzen bzw. der Kühlplatten geregelt wird. Der Verglasungszustand kann hiebei mit Vorteil durch einem optischen Sensor zur Bestimmung der Transmission und/oder der Reflexion des Schlackenbandes am Abwurfende der Kühlplatten ermittelt werden, womit insgesamt eine exakte Regelung auf einen hohen Glasanteil erfolgen kann. Insbesondere für die Zementerzeugung muß die Schlacke wenigstens 90 bis 95 Gewichtsprozent glasigen Anteil aufweisen, was ohne eine spezielle Verfahrensführung nicht ohne weiteres gelingt. Durch die erfindungsgemäße Regelung ist es ohne weiteres möglich bei geringem Bauaufwand eine Granulierung von Hochofenschlacke mit 90 bis 100%igem Glasanteil zu gewährleisten. Wobei der gewünschte hohe Glasanteil dadurch sichergestellt werden kann, daß die Abkühlgeschwindigkeit auf Werte zwischen 10°/sec und 20°/sec eingestellt wird.

Um die gewünschte geringe Schichtdicke zu gewährleisten, muß dafür Sorge getragen werden, daß der Kühlzylinder bzw. die Kühlplatten trotz der hohen Temperaturdifferenz eine gleichmäßige Gestaltung behalten. Zu diesem Zweck ist mit Vorteil die Ausbildung so getroffen, daß die Kühlwalze bzw. ebene Kühlplatten mit rasterförmigen Nuten in der Plattenoberfläche verwendet werden. Zur Aufrechterhaltung einer hohen Temperaturdifferenz und damit verbunden, zur Erzielung einer überaus raschen Abkühlung unter Ausbildung eines hohen Glasanteiles wird mit Vorteil so vorgegangen, daß der Kühlzylinder bzw. die Kühlplatten durch Strahlungs- und/oder Kontaktkühlung und/oder durch Aufsprühen von Kühlmittel auf Temperaturen unter 400°C vorzugsweise unter 350°C in von Schlacke freien Bereichen des rücklaufenden Trumes gekühlt werden.

Die wesentliche Voraussetzung für die Ausbildung des gewünschten Glasanteiles und die Verwendbarkeit einer nachfolgend granulierten Hochofenschlacke in der Zementindustrie, ist aber auch die Einhaltung einer bestimmten Basizität wüschenswert. Mit Vorteil wird hiebei so vorgangen, daß dem Zwischenspeicher in Abhängigkeit von der Schlackenanalyse saure Additive wie z.B. SiO₂ aufgegeben werden, um die gewünschte Schlackenbasizität aufrechtzuerhalten.

Eine weitere Verbesserung der Qualität des Schlackengranulates läßt sich dadurch sicherstellen, daß aus dem Zwischenspeicher über einen unterhalb des Schlackenabstiches angeordneten weiteren Abstich sedimentiertes Roheisen abgezogen wird.

Um wie eingangs erwähnt sicherzustellen, daß ein sicheres Ablösen des gekühlten Schlackenbandes von der Oberfläche der Platten gelingt, wird mit Vorteil das Verfahren so durchgeführt, daß die Schlackenbandabwurftemperatur mit 700°C bis 800°C eingestellt wird. Auf diese Weise wird sichergestellt, daß ein zusammenhängendes Band einer nachfolgenden Trockengranulation zugeführt werden kann, wobei eine von Rückständen freie Kühlwalzen- bzw. Kühlplattenoberfläche in von Schlacke freien Bereichen des Kühlplattenbandes bzw. der Kühlwalze durch unmittelbare Kontaktierung mit gekühlten Gegenplatten rückgekühlt werden kann. Temperaturen von 800 bis 1000°C führen zwar gleichfalls zu einem gut ablösbaren zusammenhängenden Schlackenband, wobei jedoch in der Folge weiter rasch gekühlt werden muß, um die Gefahr einer Rekristallisation zu vermeiden. Weiters ist ein noch plastisches Band nur mit höherem Aufwand zerkleinerbar, da das Brechen erst bei Temperaturen unter 800°C gelingt bzw. möglich ist. Die Energierückgewinnung in von Schlacke freien Bereichen des Kühlplattenbandes bzw. der Kühlwalze gestaltet sich auf diese Weise überaus effizient.

Die Energierückgewinnung bis ca. 700°C Schlackentemperatur in nur einer Kühlstufe hat sowohl wirtschaftliche als auch qualitative Vorteile.

Die Energierückgewinnung des Verfahrens kann noch verbessert werden, wenn die Abwärme des Schlackenbandes am Abwurfende in einem Kühlschacht oder einer Vibrorinne rückgewonnen wird.

Über die im Bereich der Verteilerrinnen angeordneten Heizeinrichtungen, insbesondere Gasbrenner, kann auch bei etwaigen Stillständen eine vorzeitige Erstarrung vermieden werden. Insbesondere wenn die Temperatur der Hochofenschlacke durch betriebliche Umstände z.B. auf Temperaturen unter 1350°C abfällt, oder wenn die Analyse der Schlacke nicht in den sauren Bereich fällt, tendiert Hochofenschlacke zu einer kristallinen Erstarrung und es fällt der Glasanteil bei der Erstarrung wesentlich ab. Die Steigerung der Abkühlgeschwindigkeit, sowie der gegebenenfalls erforderliche Zusatz von sauren Additiven in den Zwischenspeicher, läßt auch hier die Einstellung der jeweils günstigsten Bedingungen in einfacher Weise zu.

Insgesamt wird eine konstruktiv einfache und in einfacher Weise regelbare Verfahrensweise geschaffen, mit welcher der gewünschte Glasanteil und der Materialdurchsatz bei geringer Umweltbelastung optimiert werden kann. Insbesonders ist es durch die erfindungsgemäße Verfahrensführung möglich, dann wenn entsprechendes Ausgangsmaterial mit guten Verglasungseigenschaften zum Einsatz gelangt, den Durchsatz durch Erhöhung der Schichtdicke zu vergrößern, wofür der regelbare Schlackenabstich aus dem Zwischenspeicher entsprechend geöffnet werden kann. Um kurzfristigen Schwankungen zu begegnen und die Schichtdicke bei nicht hinreichender Verglasung wieder abzusenken, genügt in einfacher Weise die Fördergeschwindigkeit der Kühlwalze bzw. der Kühlplatten zu erhöhen, sodaß bei gleichem Materialdurchsatz eine geringere Schichtstärke und damit eine raschere Abkühlung ermöglicht wird. Mit dem Stopfenauslaß des Zwischenspeichers wird hiebei in erster Linie eine grobe Voreinstellung und Grobregelung möglich, wobei die Feinregelung durch die regelbare Geschwindigkeit des Plattenbandes gewährleistet wird.

Das erfindungsgemäße Verfahren kann wie eingangs erwähnt mit wenigstens einer Kühlwalze oder einem Kühlplattenband durchgeführt werden, wobei die erfindungsgemäße Vorrichtung mit Vorteil so ausgebildet ist, daß ein Zwischenspeicher für die flüssige Schlacke vorgesehen ist, daß dem Zwischenspeicher eine Verteilerrinne nachgeschaltet ist und daß die Verteilerrinne eine Mehrzahl benachbarter Aus- bzw. Überläufe für die Abgabe der geschmolzenen Schlacke in zueinander parallelen Strängen auf die nachgeschaltete Kühlwalze oder die Kühlplatten aufweist. Erst dadurch, daß ein Zwischenspeicher für die flüssige Schlacke vorgesehen ist, wird in einfacher Weise ein kontinuierliches Verfahren ermöglicht, da eine diskontinuierlich abgestochene Schlacke in diesem Zwischenspeicher ohne Wärmeverlust gelagert werden kann. Dadurch, daß dem Zwischenspeicher eine Verteilerrinne nachgeschaltet ist und daß die Verteilerrinne eine Mehrzahl benachbarter Aus- bzw. Überläufe für die Abgabe der geschmolzenen Schlacke in zueinander parallelen Strängen auf die nachgeschaltete Kühlwalze oder die Kühlplatten aufweist, wird in einfacher Weise eine überaus gleichmäßige Aufbringung der Schlacke auf die Kühlwalze bzw. auf das Kühlplattenband ermöglicht. Es kann damit eine überaus geringe Schichtdicke der Schlacke bei einer relativen großen Breite des Schlackenbandes erzielt werden, ohne daß gleichzeitig Verkrustungen oder eine vorzeitige Abkühlung der Schlacke, welche eine dünnflüssige Verteilung verhindert, auftreten.

Mit besonderem Vorteil ist die Vorrichtung so ausgebildet, daß die Verteilerrinne schwenkbar angeordnet ist und in einer ersten Schwenklage in eine Auslaufstellung verbringbar ist, in welcher zueinander parallele Stränge auf die Kühlwalze oder Kühlplatten aufgebracht werden und in einer weiteren entgegengesetzten Schwenklage den Inhalt der Verteilerrinne in ein Sammelgefäß verbringt. Dies ist insbesondere bei einer durch einen Notfall erforderlichen Abschaltung der Vorrichtung von Vorteil, da damit der Fluß der Schlacke aus der Verteilerrinne in ein Sammelgefäß geleitet werden kann und die Schlacke nicht unkontrolliert auf die Kühlwalze bzw. das Kühlplattenband gelangt, wodurch die Betriebssicherheit erhöht wird.

Mit besonderem Vorteil sind im Bereich des freien Strahles zwischen Verteilerrinne und Kühlwalze bzw. Kühlplatten Strahlbleche zur Wärmeabschirmung angeordnet. Damit wird ein vorzeitiges Abkühlen der Schlacke vor der Aufgabe auf die Kühlwalze bzw. das Kühlplattenband, welches zu einer ungleichmäßigen Verteilung der Schlacke auf dem Kühlzylinder bzw. auf dem Kühlplattenband führt, vermieden. In einfacher Weise kann eine Wärmerückgewinnung der sich abkühlenden Schlacke dadurch erzielt werden, daß über wenigstens einen Teil des Umfanges der Kühlwalze oder entlang wenigstens eines Teiles des Weges der Kühlplatten bzw. des Kühlplattenbandes Platten zur Rückgewinnung der Strahlungswärme angeordnet sind. Mit besonderem Vorteil ist die erfindungsgemäße Vorrichtung so getroffen, daß in von Schlacke freien Bereichen des Kühlplattenbandes bzw. der Kühlwalze Gegenplatten bzw. Kühlplatten und/oder Sprühdüsen zum Aufsprühen von Kühlmittel angeordnet sind. Zusätzlich zu der Wärmeabgabe der Kühlwalze bzw. des Kühlplattenbandes durch Strahlung bzw. Kontakt wird hiemit eine Kühlung erreicht, welche gewährleistet, daß die Kühlwalze bzw. das Kühlplattenband im Bereich der Aufgabe der Schlacke eine Temperaturdifferenz zur Schlacke aufweist, welche für die Abkühlung der Schlacke erforderlich ist.

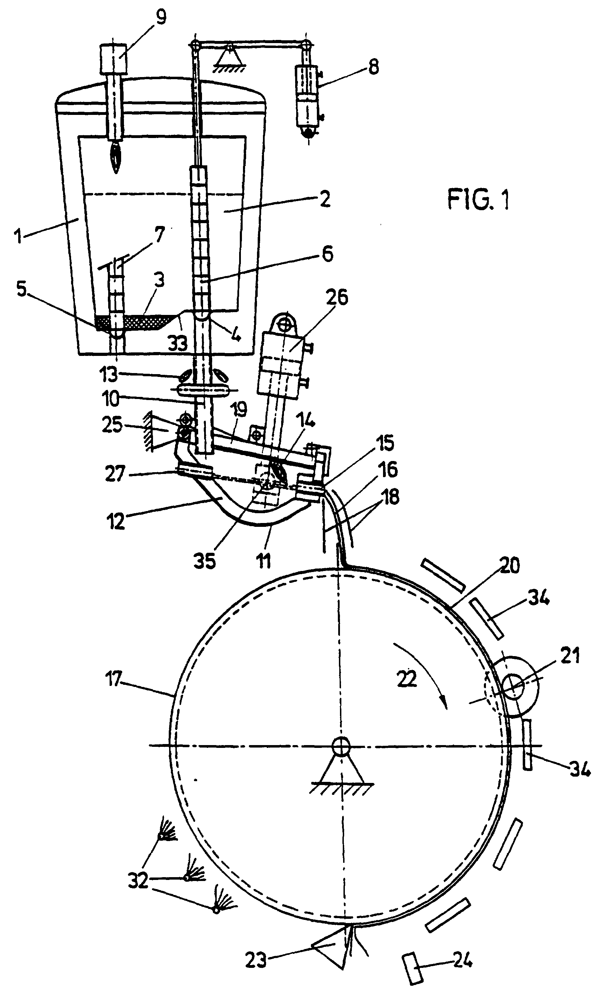

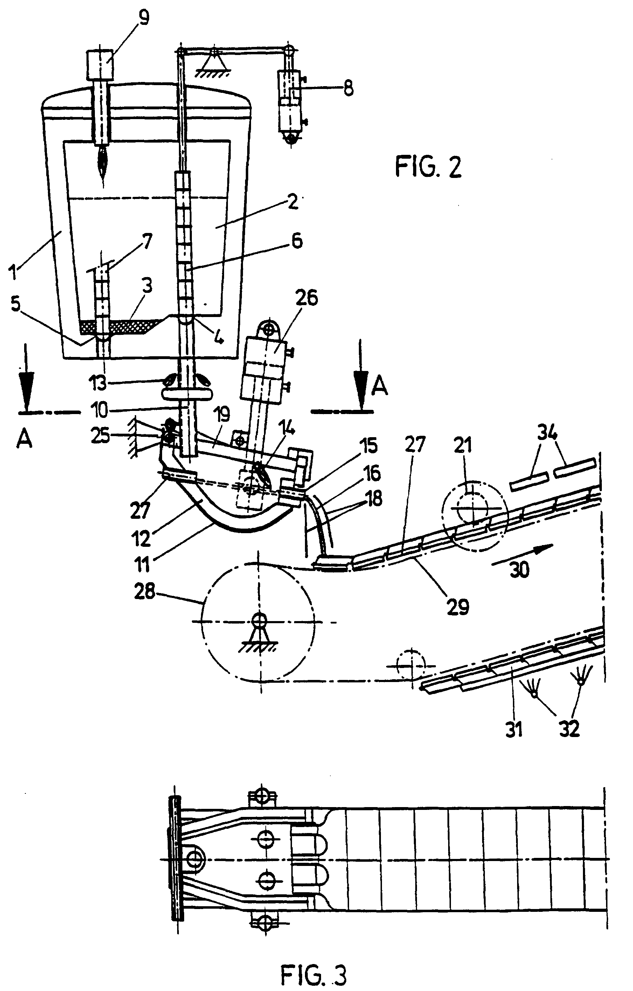

Das Verfahren wird im folgenden anhand eines in Zeichnungen schematisch dargestellten Ausführungsbeispieles näher beschrieben. In diesen zeigen Fig. 1 eine Vorrichtung zur kontinuierlichen Herstellung einer glasartigen bzw. verglasten Hochofenschlacke, bei welcher die Schlacke auf ein Kühlwalze aufgebracht wird, Fig. 2 eine Vorrichtung zur kontinuierlichen Herstellung einer glasartigen bzw. verglasten Hochofenschlacke, bei welcher die Schlacke auf ein Kühlplattenband aufgebracht wird und Fig. 3 einen Schnitt entlang einer Linie A-A durch die in Fig. 2 dargestellte Vorrichtung.

In Fig. 1 ist mit 1 ein Zwischenspeicher bezeichnet, welcher periodisch mit Hochofenschlacke 2, welche auch Reste von flüssigen Roheisen 3 enthält, durch eine nicht näher dargestellte Zuführung beschickt wird. Der Zwischenspeicher weist eine Vertiefung 33 auf, in welcher sich das abgesetzte flüssige Roheisen 3 sammeln kann. Der Zwischenspeicher 1 ist weiters mit einem Abstich 4 oberhalb der Vertiefung 33 für das Ausbringen von Schlacke 2 und mit einem Abstich 5 in der Vertiefung 33 für das Ausbringen von flüssigem Roheisen 3 versehen. Die Abstiche 4 und 5 lassen sich mit den Stopfen 6 und 7 verschließen, wobei die Entnahme der Schlacke 2 über den mit einer Stopfensteuerung 8 geregelten Stopfen 6 erfolgt und die Stopfensteuerung 8 auf die Weiterverarbeitung der Schlacke abgestimmt ist. Flüssiges Roheisen 3 kann über den Abstich 5 durch Anheben des Stopfens 7 aus dem Zwischenspeicher 1 abgezogen werden. Zur Einstellung der gewünschten Schlackenbasizität können in Abhängigkeit von der Schlackenanalyse dem Zwischenspeicher 1 saure Additive aufgegeben werden. Zur Vorwärmung des Zwischenspeichers vor Einfüllen der Schlacke 2 und zur Aufrechterhaltung der Schlackentemperatur während des Betriebes der Vorrichtung ist der Zwischenspeicher 1 mit einem Brenner 9 versehen. Die über den Abstich 4 abgezogene Hochofenschlacke 2 gelangt über ein horizontales oder vertikales Zwischenrohr 10 auf eine Verteilerrinne 11, welche mit einer feuerfesten Ausmauerung 12 versehen ist. Das Zwischenrohr 10 sowie die Verteilerrinne 11 sind zur Aufrechterhaltung der Schlackentemperatur mit Brennern 13, 14 versehen. Dabei ist der Brenner 13 am Zwischenrohr 10 als Ringbrenner ausgeführt, womit ein "Einfrieren" des Stopfens 6 auch während eines Betriebsstillstandes verhindert werden kann. Die Verteilerrinne 11 verfügt infolge einer muldenartigen Ausbildung über eine Speicherkapazität, womit Turbulenzen, welche durch das Einfließen der Schlacke 2 über das Zwischenrohr entstehen können, ausgeglichen werden. Auslaufseitig verfügt die Verteilerrinne 11 über mehrere Auslaufrohre 15, sodaß kleine Schlackenströme 16 auf die in kurzer Distanz darunterliegende Kühlwalze 17 auslaufen. Um die Dünnflüssigkeit der Schlacke zu gewährleisten und ein vorzeitiges Abkühlen der Schlacke zu verhindern, sind zur Verringerung von Wärmeverlusten im Bereich der freien Schlackenströme 16 Strahlbleche 18 angeordnet. Außerdem ist die Verteilerrinne mit einem isolierenden Deckel 19 versehen. Die Schlackenströme 16 fließen beim Auftreffen auf die Kühlwalze auseinander und vereinigen sich zu einem entsprechend breiten Schlackenband 20 mit gleichmäßiger dünner Schicht. Diese dünne Schicht erstarrt infolge Wärmeabgabe an die Kühlwalze 17 und durch Strahlung sehr rasch, worauf die Schichtdicke mit einem Fühlrad 21 gemessen wird. Der Meßwert der Schichtdicke dient dabei als Regelgröße für die Stopfensteuerung 8. Entlang der Kühlwalze 17 sind Strahlungspaneele 34 angebracht, womit zumindest ein Teil der Strahlungswärme des Schlackenbandes 20 zurückgewonnen werden kann. Bei ihrer Bewegung in Richtung des Pfeiles 22 kühlt die Schlacke infolge der Wärmeabgabe an die Kühlwalze 17 weiter ab, wobei die durch die Innenkühlung entnommene Wärme durch ein nicht näher dargestelltes Dampfkesselsystem verwertet wird. Die glasartig bzw. verglaste Schlacke wird durch eine Abstreifvorrichtung 23 von der Kühlwalze 17 abgelöst und in einem nicht näher dargestellten Brecher fraktioniert. Die Schlackenrestwärme kann dabei nach der Zerkleinerung gewonnen werden. Um zu erfassen, ob die Hochofenschlacke am Abwurf die gewünschte glasartige bzw. verglaste Struktur aufweist, ist ein mit der Antriebsregelung der Kühlwalze 17 bzw. der Verschlußregelung des Stopfenablaufes 8 am Zwischenspeicher 1 zusammenwirkendes optisches Meßgerät 24 angebracht. Als weitere Meßgröße für die Regelung der Entnahmemenge der Schlacke wird, wie bereits oben erwähnt, die Schlackendicke durch das Dickenmeßgerät 21 auf dem Weg zum Abwurf gemessen. Die Kühlwalze kann in den von Schlacke freien Bereichen mit über Sprühdüsen 32 aufgesprühten Kühlmittel gekühlt werden.

Die Verteilerrinne ist an einem Lager 25 verschwenkbar gelagert und kann mit einem Zylinderkolbenaggregat 26, welches an einem Lagerauge 35 mit der Verteilerrinne 11 gelenkig verbunden ist, gehoben bzw. gesenkt werden. Damit kann bei einem Betriebsstillstand die Verteilerrinne 11 so abgesenkt werden, daß der gesamte Inhalt der Verteilerrinne 11 über die Auslaufrohre 15 gelangt und die Verteilerrinne 11 somit entleert werden kann. Außerdem ist es möglich bei einer plötzlich, z.B. durch einen Notfall erforderlichen Betriebsabschaltung die Verteilerrinne 11 mit dem Zylinderkolbenaggregat 26 so anzuheben, daß der Fluß der Schlacke nicht durch die Auslaufrohre 15 sondern durch Auslaufrohre 27 geleitet wird und die Schlacke in einen nicht näher dargestellten Sammelbehälter verbracht wird.

Bei der Darstellung gemäß Fig. 2 sind die Bezugszeichen der ähnlich ausgebildeten Ausführungsform gemäß Fig. 1 für gleiche Bauteile beibehalten worden. Auch bei dieser Ausführungsform wird die Schlacke 2 von einem Zwischenspeicher 1 über ein Zwischenrohr 3 in eine Verteilerrinne 17 geleitet, von wo aus die Schlacke über mehrere Überlaufrohre 5 in Teilströmen auf Kühlplatten 27, welche auf einem über Umlenkrollen 28 umlaufenden Endlosförderband 29 angebracht sind, gelangt. Bei ihrer Bewegung in Richtung des Pfeiles 30 kühlt die Schlacke ab und wird, wie schon in Fig.1 beschrieben, in glasartigem bzw. verglastem Zustand am Förderbandende mit einer nicht näher dargestellten Abstreifvorrichtung vom Förderband gelöst. Nach Richtungsumkehr können die leeren Kühlplatten 31 auch durch entlang des rücklaufenden Trumes angebrachte Sprühvorrichtungen 32 abgekühlt werden.

In Fig. 3 ist ein Schnitt A-A durch die in Fig. 2 gezeigte Ausführüngsform ersichtlich, wobei die Bezugszeichen von Fig. 2 übernommen wurden.

## Patentansprüche

1. Verfahren zum kontinuierlichen Herstellen einer glasartigen bzw. verglasten Hochofenschlacke, bei welchem die Schlacke auf eine Kühlwalze (17) oder auf gelenkig miteinander verbundene Kühlplatten (27) aufgebracht wird, welche als endloses Förderband über Umlenkrollen geführt werden und wobei die Kühlung der Schlacke trocken erfolgt, dadurch gekennzeichnet, daß die flüssige Schlacke einem Zwischenspeicher (1) zugeführt wird und aus diesem Zwischenspeicher (1) bei Temperaturen von über 1350°C über eine Verteilerrinne (11) in zueinander parallelen Strängen (16) kontinuierlich auf das Kühlplattenband (29) oder die Kühlwalze (17) aufgegeben wird, worauf die gekühlte Schlacke abgeworfen und in einem Brecher trocken zerkleinert bzw. granuliert wird.

2. Verfahren nach Anspruch 1, dadurch gekennzeichnet, daß die Schichtdicke auf der Kühlwalze bzw. dem Kühlplattenband auf 1 bis 15 mm, vorzugsweise 2 bis 10 mm eingestellt wird, daß die Flüssigschlacke am Kühlplattenband um wenigstens 300°C mit einer Kühlgeschwindigkeit von über 10°C/sec gekühlt wird und daß die gekühlte Schlacke bei Temperaturen von über 600°C abgeworfen wird.

3. Verfahren nach Anspruch 1 und 2, dadurch gekennzeichnet, daß die flüssige Schlacke über die Verteilerrinne in zueinander parallele Stränge mit einem Abstand von weniger als 300 mm, vorzugsweise 100 bis 200 mm geteilt auf die Kühlwalze bzw. das Kühlplattenband aufgegeben wird.

4. Verfahren nach Anspruch 1, 2 oder 3, dadurch gekennzeichnet, daß die Verteilerrinnen über jeweils wenigstens ein Heizelement insbesondere einem auf die Öffnung gerichteten Brenner nahe der auf Temperaturen über 1350°C insbesonders 1400°C gehalten wird.

5. Verfahren nach einem der Ansprüche 1 bis 4, dadurch gekennzeichnet, daß der Schlackenabstich aus dem Zwischenspeicher in die Verteilerrinne über einen regelbaren Verschluß, insbesondere Stopfenablauf in Abhängigkeit von der Schichtdicke der Schlacke auf der Kühlwalze bzw. auf den Kühlplatten geregelt wird.

6. Verfahren nach einem der Ansprüche 1 bis 4, dadurch gekennzeichnet, daß die Fördergeschwindigkeit der Kühlwalze bzw. der Kühlplatten und/oder der Schlackenabstich aus dem Zwischenspeicher in Abhängigkeit von einem Meßwert für den Verglasungszustand am Abwurfende der Kühlplatten geregelt wird.

7. Verfahren nach Anspruch 6, dadurch gekennzeichnet, daß der Verglasungszustand durch einen optischen Sensor zur Bestimmung der Transmission und/oder der Reflexion des Schlackenbandes am Abwurfende der Kühlwalze bzw. der Kühlplatten ermittelt wird.

8. Verfahren nach einem der Ansprüche 1 bis 7, dadurch gekennzeichnet, daß die Schlackenbandabwurftemperatur mit 700°C bis 800°C eingestellt wird.

9. Verfahren nach einem der Ansprüche 1 bis 8, dadurch gekennzeichnet, daß die Abkühlgeschwindigkeit auf Werte zwischen 10°/sec und 20°/sec eingestellt wird.

10. Verfahren nach einem der Ansprüche 1 bis 9, dadurch gekennzeichnet, daß die Abwärme des Schlackenbandes am Abwurfende in einem Kühlschacht oder einer Vibrorinne rückgewonnen wird.

11. Verfahren nach einem der Ansprüche 1 bis 10, dadurch gekennzeichnet, daß aus dem Zwischenspeicher über einen unterhalb des Schlackenabstiches angeordneten weiteren Abstich aus sedimentiertes Roheisen abgezogen wird.

12. Verfahren nach einem der Ansprüche 1 bis 11, dadurch gekennzeichnet, daß dem Zwischenspeicher in Abhängigkeit von der Schlackenanalyse saure Additive wie z.B. SiO₂ aufgegeben werden, um die gewünschte Schlackenbasizität aufrechtzuerhalten.

13. Verfahren nach einem der Ansprüche 1 bis 12, dadurch gekennzeichnet, daß die Kühlwalze bzw. ebene Kühlplatten mit rasterförmigen Nuten in der Plattenoberfläche verwendet werden.

14. Verfahren nach einem der Ansprüche 1 bis 13, dadurch gekennzeichnet, daß die Kühlwalze bzw. die Kühlplatten durch Strahlungs- und/oder Kontaktkühlung und/oder durch Aufsprühen von Kühlmittel auf Temperaturen unter 400°C vorzugsweise unter 350°C in von Schlacke freien Bereichen gekühlt werden.

15. Vorrichtung zur Durchführung des Verfahrens nach einem der Ansprüche 1 bis 14 mit wenigstens einer Kühlwalze (17) oder Kühlplatten (27), dadurch gekennzeichnet, daß ein Zwischenspeicher für die flüssige Schlacke vorgesehen ist, daß dem Zwischenspeicher (1) eine Verteilerrinne (11) nachgeschaltet ist und daß die Verteilerrinne (11) eine Mehrzahl benachbarter Aus- bzw. Überläufe (15) für die Abgabe der geschmolzenen Schlacke in zueinander parallelen Strängen (16) auf die nachgeschaltete Kühlwalze (17) oder die Kühlplatten (27) aufweist.

16. Vorrichtung nach Anspruch 15, dadurch gekennzeichnet, daß die Verteilerrinne schwenkbar angeordnet ist und in einer ersten Schwenklage in eine Auslaufstellung verbringbar ist, in welcher zueinander parallele Stränge auf die Kühlwalze oder Kühlplatten aufgebracht werden und in einer weiteren entgegengesetzten Schwenklage den Inhalt der Verteilerrinne in ein Sammelgefäß verbringt.

17. Vorrichtung nach Anspruch 15 oder 16, dadurch gekennzeichnet, daß im Bereich der freien Stränge zwischen Verteilerrinne und Kühlwalze bzw. Kühlplatten Strahlbleche zur Wärmeabschirmung angeordnet sind.

18. Vorrichtung nach Anspruch 15, 16 oder 17, dadurch gekennzeichnet, daß über wenigstens einen Teil des Umfanges der Kühlwalze oder entlang wenigstens eines Teiles des Weges der Kühlplatten bzw. des Kühlplattenbandes Platten zur Rückgewinnung der Strahlungswärme der Schlacke angeordnet sind.

19. Vorrichtung nach einem der Ansprüche 15 bis 18, dadurch gekennzeichnet, daß in von Schlacke freien Bereichen des Kühlplattenbandes bzw. der Kühlwalze Gegenplatten bzw. Kühlplatten und/oder Sprühdüsen zum Aufsprühen von Kühlmittel angeordnet sind.

## Claims

1. A method for continuously producing a vitreous or vitrified blast furnace slag, in which the slag is applied on a cooling roll (17) or on articulately connected cooling plates (27) conducted as an endless conveyor belt via deflection pulleys and wherein cooling of the slag is effected in a dry manner, characterized in that the liquid slag is supplied to an intermediate storage (1) and from said intermediate storage (1) is continuously applied onto the cooling plate belt (29) or the cooling roll (17) at temperatures of above 1350°C via a distributing channel (11) in parallel strands (16), whereupon the cooled slag is thrown off and disintegrated or granulated dry in a crusher.

2. A method according to claim 1, characterized in that the layer thickness on the cooling roll or cooling plate belt is adjusted to 1 to 15 mm, preferably 2 to 10 mm, that the liquid slag on the cooling plate belt is cooled by at least 300°C at a cooling speed of above 10°C/s and that the cooled slag is thrown off at temperatures of above 600°C.

3. A method according to claims 1 and 2, characterized in that the liquid slag is dividedly applied onto the cooling roll or cooling plate belt via the distributing channel in parallel strands at a distance of less than 300 mm, preferably 100 to 200 mm.

4. A method according to claim 1, 2 or 3, characterized in that the distributing channel is each heated]by at least one heating element, in particular a burner directed to the outlet opening near the internal run-off edge and the slag is maintained at temperatures of above 1350°C, in particular 1400°C.

5. A method according to any one of claims 1 to 4, characterized in that the slag tap from the intermediate storage into the distributing channel is controlled as a function of the layer thickness of the slag on the cooling roll or cooling plates by an adjustable sealing means, in particular a stopper runoff.

6. A method according to any one of claims 1 to 4, characterized in that the conveying speed of the cooling roll or cooling plates and/or the slag tap from the intermediate storage is controlled as a function of a measured value indicating the state of vitrification on the throw-off end of the cooling plates.

7. A method according to claim 6, characterized in that the state of vitrification is detected by an optical sensor to determine the transmission and/or reflexion of the slag strip on the throw-off end of the cooling roll or cooling plates.

8. A method according to any one of claims 1 to 7, characterized in that the slag strip throw-off temperature is adjusted at 700°C to 800°C.

9. A method according to any one of claims 1 to 8, characterized in that the cooling speed is adjusted to values ranging between 10°/s and 20°/s.

10. A method according to any one of claims 1 to 9, characterized in that the waste heat of the slag strip on the throw-off end is recovered in a cooling shaft or a vibro-gutter.

11. A method according to any one of claims 1 to 10, characterized in that sedimented pig iron is drawn off the intermediate storage via a further tap arranged below the slag tap.

12. A method according to any one of claims 1 to 11, characterized in that acidic additives such as, e.g., SiO₂ are charged into the intermediate storage as a function of the slag analysis in order to maintain the desired slag basicity.

13. A method according to any one of claims 1 to 12, characterized in that the cooling roll or plane cooling plates having grid-shaped, grooves in the plate surfaces are employed.

14. A method according to any one of claims 1 to 13, characterized in that the cooling roll or cooling plates are cooled to temperatures of below 400°C, preferably below 350°C, in regions free of slag by radiation cooling and/or contact cooling and/or by spraying a coolant.

15. A device for carrying out the method according to any one of claims 1 to 14, including at least one cooling roll (17) or cooling plates (27), characterized in that an intermediate storage is provided for the liquid slag, that a distributing channel (11) is arranged to follow the intermediate storage (1), and that the distributing channel (11) comprises a plurality of neighboring runout and/or overflow means (15) to deliver the molten slag in parallel strands (16) onto the consecutively arranged cooling roll (17) or cooling plates (27).

16. A device according to claim 15, characterized in that the distributing channel is pivotably arranged and, in a first pivoted position, is placeable into a runout position in which parallel strands are applied on the cooling roll or cooling plates and, in a further oppositely pivoted position, transfers the content of the distributing channel into a receptacle.

17. A device according to claim 15 or 16, characterized in that radiation sheets are arranged in the region of the free strands between the distributing channel and the cooling roll or cooling plates to provide a thermal shield.

18. A device according to claim 15, 16 or 17, characterized in that plates are arranged over at least a portion of the circumference of the cooling roll or along at least a portion of the path of the cooling plates or cooling plate belt to recover the radiation heat of the slag.

19. A device according to any one of claims 15 to 18, characterized in that counterplates or cooling plates and/or spraying nozzles for spraying a coolant are arranged in slag-free regions of the cooling plate belt or the cooling roll, respectively.

## Revendications

1. Procédé pour la fabrication continue d'un laitier d'un haut fourneau vitreux ou vitrifié, avec lequel le laitier est appliqué sur un rouleau de refroidissement (17) ou sur des plaques de refroidissement (27) reliées entre elles de façon articulée, qui sont guidées par des galets de renvoi sous la forme d'une bande transporteuse sans fin et le refroidissement du laitier s'effectuant à sec, caractérisé en ce que le laitier liquide est amené à un réservoir intermédiaire (1) et évacué de ce réservoir intermédiaire (1) à des températures supérieures à 1350°C, par une goulotte de répartition (11) en tronçons (16) parallèles entre eux de façon continue sur la bande de plaques de refroidissement (29) ou le rouleau de refroidissement (17), le laitier refroidi étant éjecté et concassé ou granulé dans un broyeur.

2. Procédé selon la revendication 1, caractérisé en ce que l'épaisseur de couche sur le rouleau de refroidissement ou la bande de plaques de refroidissement est réglée de 1 jusqu'à 15 mm, de préférence 2 à 10 mm, en ce que le laitier liquide sur la bande de plaques de refroidissement est refroidi d'au moins 300°C avec une vitesse de refroidissement supérieure à 10°C/s et en ce que le laitier refroidi est éjecté à des températures supérieures à 600° C.

3. Procédé selon les revendications 1 et 2, caractérisé en ce que le laitier liquide est divisé au moyen de la goulotte de répartition en tronçons parallèles entre eux avec un espacement de moins de 300 mm, de préférence de 100 à 200 mm, et évacué sur le rouleau de refroidissement ou la bande des plaques de refroidissement.

4. Procédé selon la revendication 1, 2 ou 3, caractérisé en ce que les goulottes de répartition sont maintenues au moyen d'au moins un élément de chauffage, en particulier un brûleur orienté vers l'ouverture, au voisinage de températures supérieures à 1350° C, en particulier 1400° C.

5. Procédé selon l'une quelconque des revendications 1 à 4, caractérisé en ce que la coulée de laitier sortant du réservoir intermédiaire et entrant dans la goulotte de répartition est réglée par une fermeture réglable, en particulier un écoulement avec bouchon, en fonction de l'épaisseur de couche du laitier sur le rouleau de refroidissement ou sur les plaques de refroidissement.

6. Procédé selon l'une quelconque des revendications 1 à 4, caractérisé en ce que la vitesse de transport du rouleau de refroidissement ou des plaques de refroidissement et/ou la coulée de laitier provenant du réservoir intermédiaire est réglée en fonction d'une valeur mesurée pour l'état de vitrification à la fin de l'éjection des plaques de refroidissement.

7. Procédé selon la revendication 6, caractérisé en ce que l'état de vitrification est déterminé par un capteur optique pour déterminer la transmission et/ou la réflexion de la bande de laitier à la fin de l'éjection du rouleau de refroidissement ou des plaques de refroidissement.

8. Procédé selon l'une quelconque des revendications 1 à 7, caractérisé en ce que la température d'éjection de la bande de laitier est réglée de 700° C jusqu'à 800° C.

9. Procédé selon l'une quelconque des revendications 1 à 8, caractérisé en ce que la vitesse de refroidissement est réglée à des valeurs comprises entre 10°/seconde et 20°/seconde.

10. Procédé selon l'une quelconque des revendications 1 à 9, caractérisé en ce que la chaleur perdue de la bande de laitier est récupérée à la fin de l'éjection dans un puits de refroidissement ou une goulotte vibrante.

11. Procédé selon l'une quelconque des revendications 1 à 10, caractérisé en ce que la fonte brute sédimentée est retirée du réservoir intermédiaire par une nouvelle percée disposée au-dessous de la coulée de laitier.

12. Procédé selon l'une quelconque des revendications 1 à 11, caractérisé en ce que des additifs acides, par exemple du Si0₂, sont ajoutés au réservoir intermédiaire en fonction de l'analyse du laitier, afin de maintenir la basicité souhaitée du laitier.

13. Procédé selon l'une quelconque des revendications 1 à 12, caractérisé en ce que le rouleau de refroidissement ou des plaques de refroidissement planes pourvues de rainures en forme de réseau est/sont utilisé(es) dans la surface des plaques.

14. Procédé selon l'une quelconque des revendications 1 à 13, caractérisé en ce que le rouleau de refroidissement ou les plaques de refroidissement est/sont refroidi(es) au moyen d'un refroidissement par rayonnement et/ou d'un refroidissement par contact et/ou d'une application par pulvérisation de réfrigérant à des températures inférieures à 400° C, de préférence inférieures à 350°C dans des zones exemptes de laitier.

15. Appareil pour l'application du procédé selon l'une quelconque des revendications 1 à 14, avec au moins un rouleau de refroidissement (17) ou des plaques de refroidissement (27), caractérisé en ce qu'il est prévu un réservoir intermédiaire pour le laitier liquide, en ce qu'une goulotte de répartition (11) est branchée en aval du réservoir intermédiaire et en ce que la goulotte de répartition (11) présente un grand nombre de sorties et de décharges (15) voisines pour la distribution du laitier fondu en tronçons parallèles entre eux sur le rouleau de refroidissement (17) monté en aval ou les plaques de refroidissement (27).

16. Appareil selon la revendication 15, caractérisé en ce que la goulotte de répartition est disposée de manière à pivoter, et, dans une première position de basculement, peut être amenée dans une position de déversement, dans laquelle des branches parallèles entre elles sont appliquées sur le rouleau de refroidissement ou les plaques de refroidissement et, dans une autre position de basculement opposée, transfère le contenu de la goulotte de répartition dans un récipient collecteur.

17. Appareil selon la revendication 15 ou 16, caractérisé en ce que des tôles de rayonnement pour la protection thermique sont disposées dans la zone des branches libres entre la goulotte de répartition et le rouleau de refroidissement ou les plaques de refroidissement.

18. Appareil selon la revendication 15, 16 ou 17, caractérisé en ce que les plaques pour la récupération de la chaleur par rayonnement du laitier sont disposées sur au moins une partie de la périphérie du rouleau de refroidissement ou le long d'au moins une partie de la trajectoire des plaques de refroidissement ou de la bande des plaques de refroidissement.

19. Dispositif selon l'une quelconque des revendications 15 à 18, caractérisé en ce que des contre-plaques ou des plaques de refroidissement et / ou des buses de pulvérisation pour la pulvérisation de réfrigérant sont disposées dans des zones, exemptes de laitier, de la bande des plaques de refroidissement ou du rouleau de refroidissement.
